# EUROPÄISCHE PATENTSCHRIFT

(11) **EP 2 819 247 B1**
(45) Veröffentlichungstag und Bekanntmachung des Hinweises auf die Patenterteilung: **08.08.2018**
(21) Anmeldenummer: 13305871.9
(22) Anmeldetag: 25.06.2013
(51) Int. Cl.: H01R 4/68, H02G 15/34

(54) **Verfahren zum elektrisch leitenden Verbinden von zwei supraleitfähigen Kabeln**
Method for connecting two superconductive cables in a manner that conducts electricity
Procédé pour relier de façon conductrice d'électricité deux câbles supraconducteurs

(43) Veröffentlichungstag der Anmeldung: 31.12.2014
(73) Patentinhaber: Nexans, 92400 Courbevoie (FR)
(72) Erfinder: Stemmle, Mark, 30625 Hannover (DE); Schmidt, Frank, 30855 Langenhagen (DE)
(74) Vertreter: Lenne, Laurence

(56) Entgegenhaltungen:
- EP-A1- 1 560 292
- JP-A- 2011 193 607
- JP-A- 2013 027 056

## Beschreibung

Die Erfindung bezieht sich auf ein Verfahren zum elektrisch leitenden Verbinden von zwei supraleitfähigen Kabeln gemäß dem Oberbegriff des Patentanspruchs 1.

Ein solches Verfahren geht beispielsweise aus der JP 2013 027056 A hervor.

Supraleitfähige Kabel sind in unterschiedlichsten Ausführungsformen seit langem bekannt. Das gilt grundsätzlich auch für Techniken zum elektrischen Verbinden von zwei supraleitfähigen Kabeln. Ein wesentlicher Unterschied der supraleitfähigen Kabel gegenüber herkömmlichen Kabeln besteht darin, daß dieselben elektrische Leiter aus einem Material haben, das bei ausreichend tiefen Temperaturen in den supraleitfähigen Zustand übergeht, mit einem bei Null liegenden elektrischen Gleichstromwiderstand. Geeignete supraleitfähige Materialien sind beispielsweise oxidische Materialien auf Basis seltener Erden. Ausreichend niedrige Temperaturen, um ein derartiges Material in den supraleitfähigen Zustand zu bringen, liegen beispielsweise zwischen 67 K und 110 K. Geeignete Kühlmittel für all diese Materialien sind beispielsweise Stickstoff, Helium, Neon und Wasserstoff oder Gemische dieser Stoffe. Beim Betrieb einer Übertragungsstrecke für elektrische Energie mit mindestens einem supraleitfähigen Kabel wird dasselbe in bekannter Technik in einem Kryostat angeordnet, der aus mindestens einem thermisch isolierten Rohr besteht, durch welches beim Betrieb der Übertragungsstrecke ein für das eingesetzte supraleitfähige Material geeignetes Kühlmittel geleitet wird, mit Vorteil eines der im Vorangehenden angeführten Kühlmittel.

In Übertragungsstrecken von elektrischer Energie müssen zwei oder mehr Längen eines supraleitfähigen Kabels elektrisch leitend miteinander verbunden werden. Das bedeutet, daß die Leiter und die Schirme der beiden Kabel zunächst von umgebenden Schichten befreit werden müssen. Nach dem elektrisch leitenden Verbinden der Leiter werden die entfernten Schichten in bekannter Technik wieder aufgebracht. Das gilt insbesondere für eine den supraleitfähigen Leiter umgebende Isolierung (Dielektrikum), die beispielsweise durch das Aufwickeln von Bändern aus Isoliermaterial auf die ganze Verbindungsstelle einschließlich der beiden Leiter wieder hergestellt wird. Danach werden die Schirme ebenfalls elektrisch leitend verbunden und es werden gegebenenfalls über denselben liegende Schichten wieder hergestellt. Das ist bereits bei einem Kabel mit nur einem Leiter und einem Schirm sehr aufwendig und zeitraubend. Es erfordert außerdem den Einsatz von Fachpersonal. Bei einem Kabel mit zwei oder drei konzentrisch zueinander angeordneten und gegeneinander isolierten Leitern, wie es beispielsweise aus der EP 1 552 536 B1 hervorgeht, ist der Aufwand extrem hoch, zumal dabei sichergestellt sein muß, daß die Wandstärke der wiederhergestellten Isolierung bzw. Isolierungen zumindest nicht wesentlich größer als die ursprüngliche Wandstärke ist. Nur dann können die Abmessungen eines die Verbindungsstelle umgebenden Kryostats so klein gehalten werden, daß sie den Betrieb der Übertragungsstrecke, insbesondere die Strömung des Kühlmittels durch den Kryostat, nicht behindert.

Die eingangs erwähnte JP 2013 027056 A beschreibt ein Verfahren zum elektrisch leitenden Verbinden der Leiter von zwei supraleitfähigen Kabeln, die parallel zueinander in ein ein Kühlmittel enthaltendes Gehäuse eingeführt werden. Ihre von umgebenden Schichten befreiten Leiter werden an ihren Stirnseiten innerhalb des Gehäuses durch ein elektrisches Kontaktelement elektrisch leitend miteinander verbunden. Die beiden in das Gehäuse eingeführten Leiter der beiden Kabel überbrücken zwischen ihrem Eintritt in das Gehäuse und dem Kontaktelement eine relativ lange Strecke.

Der Erfindung liegt die Aufgabe zugrunde, das eingangs geschilderte Verfahren so zu gestalten, daß zwei supraleitfähige Kabel mit wesentlich vermindertem Aufwand elektrisch leitend verbunden werden können.

Diese Aufgabe wird entsprechend den kennzeichnenden Merkmalen des Patentanspruchs 1 gelöst,
Der wesentliche Vorteil dieses Verfahrens besteht darin, daß nach dem elektrisch leitenden Verbinden der supraleitfähigen Leiter - unabhängig von deren Anzahl - und des Schirms keine isolierenden Schichten auf die Verbindungsstellen der jeweiligen Leiter aufgebracht werden müssen. Der Aufwand zum Verbinden der beiden Kabel ist dadurch wesentlich herabgesetzt. Das gilt sowohl für die Einsparung von Isoliermaterial als auch für die zeitraubende Tätigkeit eines Monteurs.

Dieser Vorteil kommt dann verstärkt zum Tragen, wenn die zu verbindenden Kabel zwei oder drei koaxial zueinander angeordnete Leiter haben. In bisheriger Technik muß jeweils nach dem elektrisch leitenden Verbinden von zwei Leitern zunächst die Isolierschicht bzw. das Dielektrikum für diese Leiter wieder hergestellt werden, bevor die nächsten Leiter durchverbunden werden können.

Wichtig für das Verfahren und die entsprechende Anordnung ist auch, daß die Enden der beiden Kabel parallel zueinander verlaufend, mechanisch miteinander verbunden werden, so daß die sich quer zu ihrer Achsrichtung erstreckenden elektrischen Kontaktelemente auf einfache Art und Weise auf den jeweiligen Leitern und Schirmen montiert und bei einer Bewegung der Kabelenden nicht beschädigt werden können. Für das Verfahren und eine mit demselben hergestellte fertige Anordnung ist es ohne Bedeutung, in welcher Reihenfolge die einzelnen Maßnahmen durchgeführt werden, sofern dies in Anspruch 1 nicht ausdrücklich anders angegeben ist. Bevorzugt wird ein Verfahren, mit dem zunächst die Leiter bzw. der Schirm der beiden Kabelenden freigelegt werden. Daraufhin wird zumindest das Ende des einen Kabels derart gebogen, daß es parallel zu dem Ende des anderen Kabels positioniert und mechanisch mit demselben verbunden werden kann. Anschließend werden die Kontaktelemente angebracht, die mit Vorteil von den freien Enden der Kabel her in axialer Richtung auf die Leiter und die Schirme aufgeschoben werden können. Alle geschilderten Verfahrensschritte können in einem nicht beanspruchten Verfahren grundsätzlich außerhalb eines Kryostats durchgeführt werden. Gemäß der Erfindung werden die beiden Kabel bereits jeweils in einem Kryostat angeordnet und nach dem Freilegen der Leiter und der Schirme in ein als Kryostat ausgeführtes Gehäuse eingeführt. Dabei können sie in dem Gehäuse zunächst mechanisch miteinander verbunden werden, bevor die Kontaktelemente angebracht werden.

Ein beispielsweise zusammen mit einem dasselbe umgebenden Kryostat um 180° zurückgebogenes supraleitfähiges Kabel bietet die Möglichkeit, Ausgleichselemente symmetrisch zueinander in den Kryostat einzubauen, durch welche Längenänderungen des Kryostats beim Abkühlen des Kabels und beim Wiedererwärmen desselben ausgeglichen werden können.

Das Verfahren nach der Erfindung und mit demselben hergestellte Anordnung werden als Ausführungsbeispiele anhand der Zeichnungen erläutert.

Es zeigen:
Fig. 1 bis 3 rein schematisch den Verlauf der Enden von zwei supraleitfähigen Kabeln in drei unterschiedlichen Ausführungsformen.
Fig. 4 in schematischer Darstellung eine Verbindungsstelle zwischen zwei supraleitfähigen Kabeln in genauerer Ausführung.
Fig. 5 einen Schnitt durch ein supraleitfähiges Kabel.
Fig. 6 ebenfalls schematisch die in einem Kryostat angeordnete Verbindungsstelle nach Fig. 4.

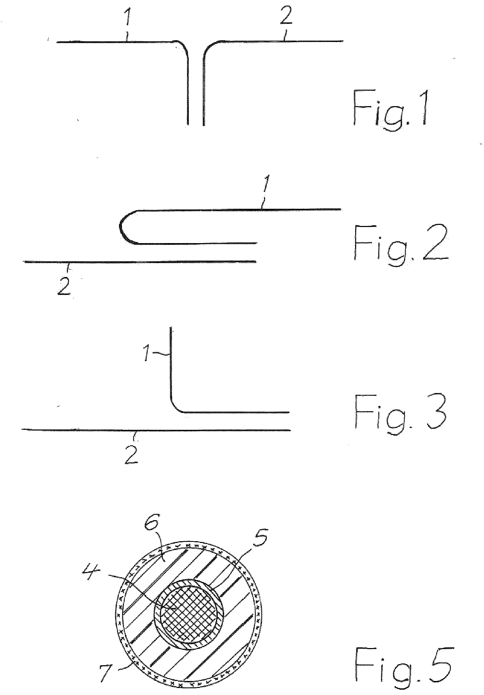

Gemäß der Erfindung sollen die Enden von zwei supraleitfähigen Kabeln nach dem Freilegen ihrer Leiter und Schirme nebeneinander und parallel zueinander angeordnet werden. Dazu muß mindestens das Ende eines der beiden Kabel so gebogen werden, daß es parallel zum Ende des anderen Kabels positioniert werden kann. Drei Beispiele für einen entsprechenden Verlauf der Enden der beiden Kabel sind in den Fig. 1 bis 3 dargestellt. Dabei sind beide Kabel nur durch Striche angedeutet.

Gemäß Fig. 1 sind die Enden von zwei supraleitfähigen Kabeln 1 und 2 jeweils um 90° gebogen. Sie liegen parallel zueinander und weisen mit ihren freien Enden in die gleiche Richtung.

Gemäß Fig. 2 ist das Ende des Kabels 1 um 180° zurückgebogen, während das Ende des Kabels 2 geradlinig verläuft.

Gemäß Fig. 3 ist das Ende des Kabels 1 um 90° gebogen, während das Ende des Kabels 2 geradlinig verläuft. In diesem Fall ist die Kabeltrasse ab der Verbindungsstelle der beiden Kabel 1 und 2 rechtwinklig abgebogen.

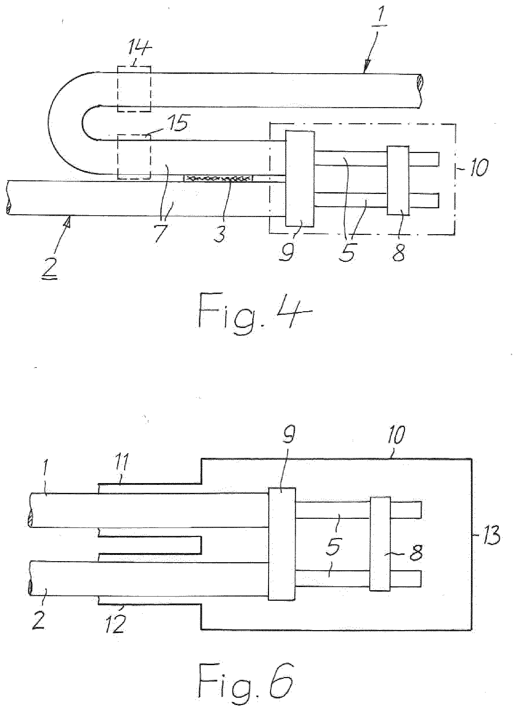

In der folgenden Beschreibung wird die Ausführungsform nach Fig. 2 anhand von Fig. 4 genauer erläutert, in welcher die Enden von zwei supraleitfähigen Kabeln 1 und 2 dargestellt sind, die parallel zueinander verlaufen und mechanisch miteinander verbunden sind. Das ist durch ein kreuzschraffiertes Zwischenstück 3 zwischen den beiden Kabeln angedeutet.

Jedes der beiden Kabel 1 und 2 weist gemäß dem in Fig. 5 dargestellten Ausführungsbeispiel einen auf einem Träger 4, der in der Fachwelt auch als "Former" bezeichnet wird, angeordneten supraleitfähigen Leiter 5 auf. Der Leiter 5 ist von einem Dielektrikum 6 (Isolierung) umgeben, über dem ein elektrisch wirksamer Schirm 7 angebracht ist. Die Leiter 5 der beiden Kabel 1 und 2 sowie deren Schirme 7 sind an den Enden der Kabel von dieselben umgebenden Schichten befreit, also auch vom Dielektrikum 6. Die Enden der beiden Kabel 1 und 2 weisen in die gleiche Richtung. Sie sind quasi "deckungsgleich" nebeneinander positioniert. Dazu ist das Kabel 1 in seinem Endbereich um 180° gebogen. Es ist also mit seinem Ende entgegengesetzt zu seinem Verlauf in einer Übertragungsstrecke zurückgebogen. In der Darstellung von Fig. 4 ist die äußere Schicht der beiden Kabel 1 und 2 jeweils der Schirm 7.

Die Leiter 5 der beiden Kabel 1 und 2 sind durch ein elektrisches Kontaktelement 8 elektrisch leitend miteinander verbunden, das quer zur Achsrichtung der beiden Kabel 1 und 2 verläuft. In gleicher Weise sind die Schirme 7 der beiden Kabel durch ein elektrisches Kontaktelement 9 elektrisch leitend miteinander verbunden. Die Kontaktelemente 8 und 9 können mit Vorteil von den freien Enden der Kabel her auf die Leiter 5 und die Schirme 7 aufgeschoben werden.

Die so mechanisch und elektrisch miteinander verbundenen Kabelenden können zum Aufbau einer Übertragungsstrecke für elektrische Energie in ein in Fig. 4 strichpunktiert angedeutetes, als Kryostat ausgeführtes Gehäuse 10 eingebracht, beispielsweise eingeschoben werden. Beim Betrieb der Übertragungsstrecke durchströmt das eingesetzte Kühlmittel, beispielsweise flüssiger Stickstoff, auch das Gehäuse 10. Das Kühlmittel ist gleichzeitig isolierendes Medium für die beiden Kabel 1 und 2 bzw. deren Leiter 5 und Schirme 7, so daß - wie bereits erwähnt - auf das Anbringen von Isoliermaterial verzichtet werden kann.

In bevorzugter Ausführungsform werden die Kabel 1 und 2 zunächst jeweils in einem Kryostat angeordnet, aus dem sie jeweils so weit herausragen, daß ihre Leiter und Schirme im geschilderten Sinne freigelegt werden können. Die Enden von entsprechenden Kryostaten 11 und 12 sind in Fig. 6 angedeutet. Sie sind mit dem als Kryostat ausgeführten Gehäuse 10 verbunden. Beim Einführen der Enden der beiden Kabel 1 und 2 in das Gehäuse 10 können sie bei dieser Ausführungsform durch im Gehäuse befindliche Halteelemente mechanisch miteinander verbunden werden.

Die elektrischen Kontaktelemente 8 und 9 können dann innerhalb des Gehäuses 10 auf die Leiter 5 und die Schirme 7 aufgebracht, insbesondere aufgeschoben werden, wobei das entsprechend gestaltete Gehäuse 10 dazu zunächst noch offen ist, beispielsweise an der Stirnseite 13. Die Stirnseite 13 des Gehäuses 10 wird abschließend verschlossen.

Das gebogene Ende des Kabels 1 und damit des dasselbe umgebenden Kryostats 11 bietet die Möglichkeit, beispielsweise zwei in Fig. 3 durch gestrichelte Umrahmungen 14 und 15 angedeutete Ausgleichselemente symmetrisch zueinander in den Kryostat 11 einzubauen, die geeignet sind, Längenänderungen des Kryostats 11 auszugleichen, die beim Abkühlen und beim Wiedererwärmen des Kabels 1 auftreten können. Geeignete Ausgleichselemente sind beispielsweise Faltenbälge.

## Patentansprüche

1. Verfahren zum elektrisch leitenden Verbinden von zwei supraleitfähigen Kabeln (1,2), die jeweils mindestens einen von einem Dielektrikum (6) umgebenen supraleitfähigen Leiter (5) und einen über dem Dielektrikum angeordneten, elektrisch wirksamen Schirm (7) aufweisen, mit welchem die zu verbindenden Leiter (5) und Schirme an den Enden der beiden Kabel (1,2) zunächst von umgebenden Schichten befreit und danach elektrisch leitend miteinander verbunden werden,
- bei welchem die Enden der beiden Kabel (1,2) derart nebeneinander und parallel zueinander angeordnet werden, dass ihre freien Enden in die gleiche Richtung weisen,
- bei welchem die Enden der beiden Kabel (1,2) fest miteinander verbunden werden,
- bei welchem die Leiter (5) der beiden Kabel (1,2) durch ein sich quer zu ihrer Achsrichtung erstreckendes, elektrisches Kontaktelement (8) elektrisch leitend miteinander verbunden werden, wobei keine isolierenden Schichten auf die Verbindungsstellen der jeweiligen Leiter aufgebracht werden,
- bei welchem die beiden derart behandelten Kabelenden beim Aufbau einer Übertragungsstrecke für elektrische Energie gemeinsam in einem Gehäuse (10) eines Kryostats angeordnet werden, das beim Betrieb der Übertragungsstrecke von einem fließfähigen Kühlmittel mit isolierenden Eigenschaften durchströmt wird, **dadurch gekennzeichnet,**
- **dass** die Schirme (7) der beiden Kabel (1,2) ebenfalls durch ein sich quer zu ihrer Achsrichtung erstreckendes, elektrisches Kontaktelement (9) elektrisch leitend miteinander verbunden werden,
- **dass** jedes der beiden Kabel (1,2) zunächst so in einem mit dem Gehäuse (10) verbundenen Kryostat (11,12) angebracht wird, dass das jeweilige Kabelende aus dem zugehörigen Kryostat herausragt und in das Gehäuse (10) hineinragt,
- **dass** die beiden Kabelenden in dem noch offenen Gehäuse (10) mechanisch miteinander verbunden werden,
- **dass** die Kontaktelemente (8,9) innerhalb des Gehäuses (10) auf den freigelegten Leitern (5) und Schirmen (7) der beiden Kabel (1,2) angebracht werden und
- **dass** das Gehäuse (10) abschließend verschlossen wird.

2. Verfahren nach Anspruch 1, **dadurch gekennzeichnet, dass** zumindest das Ende eines der beiden Kabel (1,2) so abgebogen wird, dass es parallel zum Ende des anderen Kabels (1,2) verläuft.

3. Verfahren nach Anspruch 2, **dadurch gekennzeichnet, dass** das Ende des einen Kabels um 90° abgebogen wird.

4. Verfahren nach Anspruch 2, **dadurch gekennzeichnet, dass** das Ende des einen Kabels um 180° zurückgebogen wird.

5. Verfahren nach Anspruch 1, **dadurch gekennzeichnet, dass** die Enden der beiden Kabel (1,2) um jeweils 90° gebogen werden.

## Claims

1. A method for the electrically conductive connection of two superconductive cables (1, 2), which in each case have at least one superconductive conductor (5) surrounded by a dielectric (6) and an electrically effective shield (7) arranged above the dielectric, with which the conductor (5) to be connected and shields on the ends of the two cables (1, 2) are initially freed from surrounding layers and then are connected with each other electrically conductively,
- in which the ends of the two cables (1, 2) are arranged side by side and parallel to one another in such a manner that their free ends point in the same direction,
- in which the ends of the two cables (1, 2) are firmly connected with one another,
- in which the conductors (5) of the two cables (1, 2) are connected electrically conductively with one another by an electrical contact element (8) extending transversely to their axial direction, wherein no insulating layers are applied to the connection points of the respective conductors,
- in which the two thus treated cable ends are arranged when establishing a transmission line for electrical energy jointly in a housing (10) of a cryostat, which during operation of the transmission line is flowed through by a flowable coolant with insulating properties, **characterized in**
- **that** the shields (7) of the two cables (1, 2) are also electrically conductively connected with each other by an electrical contact element (9) extending transversely to their axial direction,
- **that** each of the two cables (1, 2) is initially mounted in a cryostat (11, 12) connected with the housing (10), such that the respective cable end protrudes out of the associated cryostat and protrudes into the housing (10),
- **that** the two cable ends are mechanically connected with each other in the still open housing (10),
- **that** the contact elements (8, 9) are mounted within the housing (10) on the exposed conductors (5) and shields (7) of the two cables (1, 2) and
- **that** the housing (10) is finally closed.

2. A method according to Claim 1, **characterized in that** at least the end of one of the two cables (1, 2) is bent such that it extends parallel to the end of the other cable (1, 2).

3. A method according to Claim 2, **characterized in that** the end of the one cable is bent by 90°.

4. A method according to Claim 2, **characterized in that** the end of the one cable is bent back by 180°.

5. A method according to Claim 1, **characterized in that** the ends of the two cables (1, 2) are bent by in each case 90°.

## Revendications

1. Procédé pour la liaison électro-conductrice de deux câbles supraconducteurs (1, 2) qui comprennent chacun un conducteur supra-conducteur (5) entouré d'un diélectrique (6) et un blindage électrique (7) disposé au-dessus du diélectrique, avec lequel les conducteurs (5) à relier et les blindages sont d'abord dégagés, au niveau des extrémités des deux câbles (1, 2), des couches qui les entourent puis sont reliés de manière électro-conductrice entre eux,
- dans lequel les extrémités des deux câbles (1, 2) sont disposées l'une à côté de l'autre et de manière parallèle entre elles, de façon à ce que leurs extrémités libres soient orientées dans la même direction,
- dans lequel les extrémités des deux câbles (1, 2) sont reliées fermement entre elles,
- dans lequel les conducteurs (5) des deux câbles (1, 2) sont reliés entre eux de manière électro-conductrice par un élément de contact électrique (8) s'étendant transversalement par rapport à leur direction axiale, aucune couche isolante n'étant appliquée sur les points de liaison des conducteurs,
- dans lequel les deux extrémités de câbles ainsi traitées sont disposées ensemble, lors de la construction d'un tronçon de transmission d'énergie électrique, dans un boîtier (10) d'un cryostat, qui est parcouru, lors du fonctionnement du tronçon de transmission, par un fluide de refroidissement avec des propriétés isolantes, **caractérisé en ce que**
- les blindages (7) des deux câbles (1, 2) sont également reliés entre eux de manière électro-conductrice par un élément de contact électrique (9) s'étendant transversalement par rapport à leur direction axiale,
- chacun des deux câbles (1, 2) est d'abord monté dans un cryostat (11, 12) relié avec le boîtier (10), de façon à ce que l'extrémité de câble concernée dépasse du cryostat correspondant et dépasse dans le boîtier (10),
- les deux extrémités de câbles sont reliées entre elles de manière mécanique dans le boîtier (10) encore ouvert,
- les éléments de contact (8, 9) sont montés à l'intérieur du boîtier (10) sur les conducteurs (5) posés librement et les blindages (7) des deux câbles (1, 2) et
- le boîtier (10) est fermé par soudure.

2. Procédé selon la revendication 1, **caractérisé en ce qu'**au moins l'extrémité d'un des deux câbles (1, 2) est pliée de façon à ce qu'elle s'étende parallèlement à l'extrémité de l'autre câble (1, 2).

3. Procédé selon la revendication 2, **caractérisé en ce que** l'extrémité d'un câble est plié à 90°.

4. Procédé selon la revendication 2, **caractérisé en ce que** l'extrémité d'un câble est repliée à 180°.

5. Procédé selon la revendication 1, **caractérisé en ce que** les extrémités des deux câbles (1, 2) sont pliées chacune à 90°.
